# EUROPEAN PATENT APPLICATION

(11) **EP 4 495 202 A1**
(43) Date of publication of application: **22.01.2025**
(21) Application number: 23185727.7
(22) Date of filing: 17.07.2023
(51) Int. Cl.: C09J 165/00, C08K 3/013, C08G 61/12, C08K 3/04, C08K 3/36

(54) **REACTIVE COMPOSITION COMPRISING ACETOACETATES AND (METH)ACRYLATES**

(71) Applicant: Henkel AG & Co. KGaA, 40589 Düsseldorf (DE)
(72) Inventor: Hartmann, Olaf, 40629 Düsseldorf (DE); Gutiérrez Díaz, Jordán, 40223 Düsseldorf (DE); Garcia Miralles, Jose, 40217 Düsseldorf (DE); Kutter, Juliane, 40215 Düsseldorf (DE); Seggewiss, Patrick, 40595 Düsseldorf (DE)

(57) **Abstract**

The present invention relates to a reactive adhesive composition based on acetoacetate compound, and to its use in structural bonding applications. In particular, the reactive composition comprises (a) a multifunctional acetoacetate compound, (b) a multifunctional urethane (meth)acrylate oligomer, (c) a catalyst, and (d) a filler, wherein the filler is present in an amount of from 20% by weight to less than 75% by weight of the total weight of the reactive composition.

## Description

### Technical fields

The present invention relates to a reactive composition based on acetoacetate compound, and to its use in structural bonding application, e.g. direct glazing process. In particular, the present invention relates to a reactive composition based on acetoacetate compound and urethane (meth)acrylate oligomers with excellent mechanical strength including tensile strength and elongation.

### Background

An important field of use for adhesives in the vehicle industry, in particular in the production of automobiles, is direct glazing of vehicle windscreens. Paste-like, highly viscous adhesives are employed for these applications, and in the automobile industry as a rule are applied to the vehicle body flange or the glass windscreen. By robots, it is possible for the adhesive optionally to be heated slightly for easier application. The technical demands on adhesives for gluing windscreens in the automobile industry have risen constantly. In the original concept of automobile construction, such adhesives were used exclusively to join the windscreen into the vehicle body such that moisture and dust from the outside cannot penetrate into the interior of the vehicle body, and furthermore the windscreen should be joined into the vehicle body in a crash-stable manner, i.e., in the event of an accident the windscreen should remain firmly bonded to the vehicle body and not fall out. On the one hand passers-by should not be endangered by windscreens flying around, and on the other hand it must be possible for the now conventional airbags to be supported on the windscreen in order to keep the risk of injury to the vehicle occupants as low as possible.

Elastomeric adhesives have for years played an important role in direct glazing process of vehicle windscreens. Due to their high elasticity, combined with excellent tensile and tear strength, a broad adhesion spectrum with and without primer and their favourable price/performance ratio, they are particularly suitable for applications in the automobile industry. For example, one-component moisture-curing polyurethane adhesives are employed for the most diverse sealing and gluing problems where a high tensile and tear strength is important. In their one-component, moisture-curing embodiment, these compositions comprise a binder with free reactive isocyanate groups. In the absence of moisture, these systems are stable to storage over long periods of time in a paste-like, sometimes very highly viscous form, and when moisture from the surrounding air has access to them after application and joining of the components to be bonded, the water reacts with the isocyanate groups in a known manner and in the end leads to a high-strength elastomeric bond between the workpieces by crosslinking. In the two-component embodiment, one component comprises a similar binder with reactive isocyanate groups and the second component comprises a binder with active hydrogen, this usually being polyols, polyamines or also water in a paste-like matrix or in the form of substances which donate water, such as water-charged molecular sieves, inorganic or organic compounds containing water of crystallization and the like. One- or two-component binder systems which are free from isocyanate groups have also been proposed for adhesive applications, and silane modified polymers then comprise reactive silane groups, such as e.g. alkoxysilanes, acetoxysilanes, silazanes or oximatosilanes, instead of the reactive isocyanate groups.

However, albeit silane modified polymers have fair toxicological profile, they can only be used for lower performance applications due to limited mechanical properties. On the other hand, polyurethane based adhesives can provide sufficient bonding performance, but hazardous isocyanate component is present in the formulation and requires care in handling.

Michael addition chemistry is believed to offer an alternative sustainable process compared to polyurethane chemistry as useful polymers could be prepared in the absence of isocyanates. Michael addition chemistry, for example based on the reaction system containing acetoacetate and (meth)acrylate has been researched and used in some bonding applications.

EP 3889222 A discloses a curable potting composition, comprising a multifunctional acetoacetate compound, a (meth)acrylate compound having at least three (meth)acrylate groups, a catalyst, and a filler, wherein the equivalent ratio of the (meth)acrylate compound having at least three (meth)acrylate groups to the multifunctional acetoacetate compound is more than 1.5.

EP 1283235 B1 discloses an adhesive composition comprising an α,β-unsaturated multi-carboxylic acid ester and a compound (A) which is an acetoacetate terminated polyester or acetoacetate terminated polyesteramide.

However, the adhesive disclosed in the prior art are less elastic or flexible, and thus the above adhesive compositions are not suitable for structural bonding application, e.g. direct glazing process.

It is therefore an object of the present invention to provide a reactive composition based on Michael addition chemistry, which is suitable for structural bonding such as direct glazing.

### Summary of the invention

This object is solved by a reactive composition comprising a multifunctional acetoacetate compound, a multifunctional urethane (meth)acrylate oligomer, a catalyst and a selected amount range of filler. The cured product exhibits an excellent combination of tensile strength and elongation at break, and thus is suitable for structural bonding such as direct glazing.

In one aspect, the present invention relates to a reactive composition, especially for adhesive or sealant, comprising:
(a) a multifunctional acetoacetate compound,
(b) a multifunctional urethane (meth)acrylate oligomer,
(c) a catalyst, and
(d) a filler,
wherein the filler is present in an amount of from 20% by weight to less than 75% by weight of the total weight of the reactive composition.

In another aspect, the present invention relates to a reactive composition, based on the total weight of the reactive composition, comprising:
(a) from 1% by weight to 20% by weight of a multifunctional acetoacetate compound,
(b) from 15% by weight to 65% by weight of a multifunctional urethane (meth)acrylate oligomer,
(c) from 0.05% by weight to 2% by weight of a catalyst, and
(d) from 20% by weight to less than 75% by weight, preferably from 40% by weight to 60% by weight of a filler.

In yet another aspect, the present invention relates to a method of bonding a windscreen in a vehicle, comprising applying the reactive composition or the two or multiple-part reactive composition to bond a windscreen on a vehicle frame.

Further preferred embodiments of the invention are set out in the claims.

### Detailed description of the invention

In the present specification, the terms "a" and "an" and "at least one" are the same as the term "one or more" and can be employed interchangeably.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules.

If reference is made herein to a molecular weight of a polymer or its components, this reference refers to the weight average molecular weight M_{w} or the number average molecular weight M_{w}, if not explicitly stated otherwise. The weight average molecular weight M_{w} can be determined by gel permeation chromatography with tetrahydrofuran as the eluent according to DIN 55672-1:2007-08. The number average molecular weight Mₙ can be also determined by gel permeation chromatography with tetrahydrofuran as the eluent according to DIN 55672-1:2007-08. If not stated otherwise, all given molecular weights are those determined by end group analysis.

All percentages given herein in relation to the compositions or formulations relate to weight % relative to the total weight of the respective composition or formula, if not explicitly stated otherwise.

According to the present invention, the reactive composition for adhesive or sealant comprises:
(a) a multifunctional acetoacetate compound,
(b) a multifunctional urethane (meth)acrylate oligomer,
(c) a catalyst, and
(d) a filler,
wherein the filler is present in an amount of from 20% by weight to less than 75% by weight of the total weight of the reactive composition.

The inventors have surprisingly found that the reactive composition is suitable to be used as adhesive or sealant, especially for structural bonding, e.g. direct glazing process.

The developed reactive composition has excellent adhesion properties for structural bonding and a mild toxicologic profile compared to standard polyurethane based formulations. Based on the designed formulation, an excellent combination of mechanical strength of the cured product can be achieved.

Specifically, the reactive composition when cured exhibits a tensile strength of no less than 2 MPaand preferably no less than 3 MPa according to ASTM D638.

In addition, the reactive composition when cured exhibits an elongation at break of no less than 100%, and preferably no less than 300% according to ASTM D638.

### Multifunctional acetoacetate compound

According to the present invention, the multifunctional acetoacetate compound may have at least two acetoacetoxy groups, preferably 2 to 10 acetoacetoxy groups, and more preferably 2 to 4 acetoacetate groups. As such, this component may comprise either a single compound having at least two acetoacetoxy groups or a mixture of two or more compounds each having at least two acetoacetoxy groups. Each said compound should desirably be characterized by a number average molecular weight (Mn) of less than 12000 g/mol, for example less than 10000 g/mol or less than 6000 g/mol.

In a preferred embodiment, the reactive composition for adhesive or sealant comprises at least one acetoacetylated polyol, said acetoacetylated polyol being obtainable in accordance with the following equation (Reaction 1): 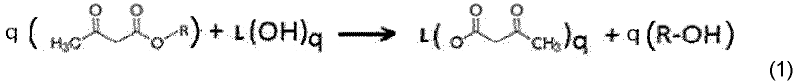 wherein:
R is a C₁-C₁₂ alkyl group;
L denotes the backbone structure of the polyol; and,
q ≥ 2.

Reaction 1 may be described as the transesterification - or more specifically the transacetylation - of a polyol with an acetoacetate compound as defined in Formula (I) below: 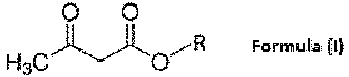 wherein R is said C₁-C₁₂ alkyl group. More typically, the constituent alkyl group R has from 1 to 8 and, preferably, from 1 to 6 carbon atoms. Exemplary alkyl acetoacetates include: t-butyl acetoacetate; isobutyl acetoacetate; n-butyl acetoacetate; isopropyl acetoacetate; n-propyl acetoacetate; ethyl acetoacetate; and, methyl acetoacetate. t-Butyl acetoacetate is preferred herein.

The polyol of Reaction 1 above is denoted by Formula (II) herein below:

L-(OH)_{q} Formula (II)

wherein q ≥ 2 and L denotes the backbone structure. Such polyols (II) may optionally include heteroatoms in their backbone or in pendent side chains. Further, the polyol (II) may be a monomeric polyhydric alcohol or may possess an oligomeric or polymeric backbone. Irrespective of this, it is preferred that the polyol (II) has a number average molecular weight (Mn) of less than 12000 g/mol; and, a hydroxyl functionality, q, of from 2 to 10, preferably from 2 to 4.

In one embodiment, the reactive composition according to the present invention comprises an acetoacetylated polyol obtained from a monomeric polyhydric alcohol. Examples of suitable monomeric polyhydric alcohols include but are not limited to: 1,2-butanediol; 1,3-butanediol; 1,4-butanediol; 2,3-butanediol; 2,4-pentanediol; butyl ethyl propane diol; 1,4-hexanediol; 1,4-cyclohexane dimethanol; pentaerythritol; dipentaerythritol; trimethylolethane; trimethylolpropane; ditrimethylolpropane; tricyclodecane dimethanol; hydroquinone bis(2-hydroxyethyl) ether; alkylene glycols, such as ethylene glycol, diethylene glycol, propylene glycol, dipropylene glycol, butylene glycol, pentamethylene glycol, hexamethylene glycol, hexylene glycol and neopentyl glycol; glycerol; castor oil; castor wax; sugars such as glucose, sucrose, fructose, raffinose, maltodextrose, galactose, xylose, maltose, lactose, mannose and erythrose; sugar alcohols such as erythritol, xylitol, malitol, mannitol and sorbitol; and, hydroxyalkylated aliphatic diamines such as o,o'-bis(diethanolaminomethyl)-p-nonylphenol, N,N,N,N'-tetra(2-hydroxypropyl)ethylenediamine (Quadrol L, available from BASF) and N,N,N,N-tetra(2-hydroxyethyl)ethylenediamine. In a preferred embodiment, the multifunctional acetoacetate compound is an acetoacetylated polyol obtained from ethylene glycol, glycerol, trimethylolpropane, ethanol isosorbide, neopentylglycol, pentaerythritol, di-methylolpropane, di-pentaerythritol, propoxylated monosaccharides, trimethylol ethane, and combination thereof.

The present invention also does not preclude such multifunctional acetoacetate compound from comprising an acetoacetylated polyol obtained from an oligomeric or polymeric polyhydric alcohol. In particular, the polyol (II) may be selected from the group consisting of: polyoxyalkylene polyols, also called polyether polyols; polyester polyols, including polycaprolactone polyols; polyesteramide polyols; polycarbonate polyols; polybutadiene polyols; polyurethane polyols; polyacrylate polyols; and, combinations thereof. Desirably such oligomeric or polymeric polyols should be characterized by: a number average molecular weight (Mn) of at most 10000 g/mol and preferably from 250 to 6000 g/mol. Further, the use of one or more polyether polyols or polyester polyols as the starting material is of particular interest. And a commercial example of a polyether polyol is Voranol CP260 (available from DowDuPont).

As is known in the art, polyester polyols can be prepared from condensation reactions of polybasic carboxylic acids or anhydrides and a stoichiometric excess of polyhydric alcohols, or from a mixture of polybasic carboxylic acids, monobasic carboxylic acids and polyhydric alcohols. Suitable polybasic carboxylic acids and anhydrides for use in preparing the polyester polyols include those having from 2 to 18 carbon atoms and in particular those having from 2 to 10 carbon atoms. Non-limiting examples of such polybasic carboxylic acids and anhydrides include: adipic acid; glutaric acid; succinic acid; malonic acid; pimelic acid; sebacic acid; suberic acid; azelaic acid; 1,4-cyclohexane dicarboxylic acid; phthalic acid; phthalic anhydride; isophthalic acid; terephthalic acid; tetrahydrophthalic acid; hexahydrophthalic acid; and, combinations thereof. Monobasic carboxylic acids which can be used include those having from 1 to 18 carbon atoms or, preferably from 1 to 10 carbon atoms, of which the following examples might be mentioned: formic acid; acetic acid; propionic acid; butyric acid; valeric acid; caproic acid; caprylic acid; capric acid; lauric acid; myristic acid; palmitic acid; stearic acid; and, combinations thereof. Suitable polyhydric alcohols have from 2 to 18 carbon atoms and desirably from 2 to 10 carbon atoms. Exemplary polyhydric alcohols include, but are not limited to: ethylene glycol; propylene glycol; hexane-1,6-diol; trimethylol propane; glycerol; neopentyl glycol; pentaerythritol; butylene glycol; 2-methyl-1,3-propane diol; hexylene glycol; and combinations thereof.

Polyether polyols may be produced by processes known in the art, such as the reaction of alkene oxides with polyhydric starter molecule in the presence of an appropriate catalyst, such as an alkali metal hydroxide, alkali metal alkoxide or antimony pentachloride. Examples of the alkene oxides include: tetrahydrofuran; ethylene oxide; 1,2-propylene oxide; 1,2- and 2,3-butylene oxide; and, styrene oxide. And examples of suitable starter molecules include but are not limited to: water; ethylene glycol; 1,2- and 1,3-propanediols; 1,4-butanediol; diethylene glycol; and, trimethylolpropane. Preferred polyether polyols for use herein are: polypropylene oxide) polyol; polyethylene oxide) polyol; PTMEG; and mixtures thereof.

Polycarbonate polyols for use herein can be selected from, but are not limited to polycarbonate diols. Such polycarbonate diols may be produced by the reaction of a diol with dialkyl or diaryl carbonates or phosgene. The reactant diols may be selected from, but are not limited to: 1,2-propanediol; 1,3-propanediol; 1,4-butanediol; 1,5-pentanediol; 1,6-hexanediol; diethylene glycol; trioxyethylene glycol; and, mixtures thereof. An exemplary diaryl carbonate is diphenyl carbonate.

The transesterification (transacetylation) Reaction 1 may be conducted by conventional methods as known in the art of polymer chemistry. Reference in this regard may be made to *inter alia:* Witzman et al. "Comparison of Methods for the Preparation of Acetoacetylated Coating Resins", Journal of Coatings Technology, Vol. 62, No. 789, October 1990; and, Witzeman et al. "Transacetoacetylation with tert-butyl acetoacetate: Synthetic Applications", J. Org. Chemistry 1991, 56, 1713-1718. Typically, the reaction between the oligomeric or polymeric polyol and the acetoacetate will involve mixing said polyol and acetoacetate in a suitable vessel, either with or without solvent, at an elevated temperature of, for example, from 50°C to 200°C or from 80°C to 150°C; preferably, the reaction is performed in the absence of solvent. The reaction is driven towards completion by distilling off the alcohol (R-OH) formed under reduced pressure. Moreover, the reaction can be conducted in the presence of a catalytic amount of a transesterification catalyst of which suitable examples include, but are not limited to, calcium acetate, zinc acetate, bismuth acetate, lead oxide and trichloroacetic acid.

Whilst the product of the above described transacetylation reaction may be used directly in the present reactive composition, that reaction product may equally be first isolated and purified using methods known in the art. Mention in this regard may be extraction, evaporation, distillation and chromatography as suitable techniques.

The multifunctional acetoacetate compound may be also commercially available. Examples include acetoacetylated ethylene glycol under the trade name of AAEG-215 from Arxada.

In accordance with the present invention, the multifunctional acetoacetate compound may be employed in an amount of 1% to 20% by weight, preferably 2% to 15% by weight of the reactive composition.

### Multifunctional urethane (meth)acrylate oligomer

According to the present invention, the reactive composition according to the present invention also comprises a multifunctional urethane (meth)acrylate oligomer.

The multifunctional urethane (meth)acrylate oligomer may be selected from a variety of materials, most desirably aliphatic urethane (meth)acrylate oligomers. Useful urethane (meth)acrylate oligomers include di- or polyfunctionalized urethane (meth)acrylate oligomers, which are capable of cross-linking during cure with multifunctional acetoacetate compounds.

Useful di- or polyfunctionalized urethane (meth)acrylate oligomers include aliphatic polyester urethane diacrylates. Such oligomers generally may be described as the reaction product of a polyester polyol and a polyisocyanate. Other di-, or polyfunctional urethane (meth)acrylate oligomers useful in the present invention can be described as the acrylated reaction product of an aliphatic alcohol, such as polycarbonate polyol, a polyether polyol, or ethylene glycol monoacrylate, and a polyisocyanate.

Representative polyether polyols useful in preparing the urethane (meth)acrylate oligomers include straight or branched alkylene oxides having from one to twelve carbon atoms (C1-12), prepared by methods known in the art. Desirably, the polyether polyols have an average molecular weight, as determined by vapor pressure osmometry (ASTM-D 3592), sufficient to give the urethane (meth)acrylate oligomer a molecular weight of no less than 3000 g/mol. Examples include, without limitation, polytetramethylene polyol, polymethylene oxide polyol, polyethylene oxide polyol, polypropylene oxide polyol, polybutylene oxide polyol, tetrahydrofuran (THF)-sym-polyether polyol and combinations thereof.

Representative hydrocarbon polyols used to prepare the urethane (meth)acrylate oligomers also include hydrocarbon polyols, straight or branched, having a molecular weight sufficient to give the urethane (meth)acrylate oligomer a molecular weight of no less than 3000 g/mol. Non-limiting examples include fully or partially hydrogenated polybutadiene polyol, polybutadiene polyol hydrogenated to an iodine number of from 9 to 21, and fully or partially hydrogenated polyisobutylene polyol.

Representative polycarbonate polyols used to prepare the urethane (meth)acrylate oligomers include but are not limited to the reaction products of dialkyl carbonate with an alkylene diol, optionally copolymerized with alkylene ether diols.

The polyisocyanates used to prepare the urethane (meth)acrylate oligomers include aliphatic and aromatic polyisocyanates having from 4 to 20 carbon atoms. Representative aliphatic examples include isophorone diisocyanate, dicyclohexylmethane-4,4'-diisocyanate, 1,4-tetramethylene diisocyanate, 1,5-pentamethylene diisocyanate, 1,6-hexamethylene diisocyanate, 1,7-heptamethylene diisocyanate, 1,8-octamethylene diisocyanate, 1,9-nonamethylene diisocyanate, 1,10-decamethylene diisocyanate, 2,2,4-trimethyl-1,5-pentamethylene diisocyanate, 2,2'-dimethyl-1,5-pentamethylene diisocyanate, 3-methoxy-1,6-hexamethylene diisocyanate, 3-butoxy-1,6-hexamethylene, omega,omega'-dipropylether diisocyanate, 1,4-cyclohexyl diisocyanate, 1,3-cyclohexyl diisocyanate, trimethylhexylnethylene diisocyanate and combinations thereof.

Suitable catalysts for reacting the aliphatic alcohol with the polyisocyanate to form the urethane portion of the urethane (meth)acrylate oligomers include such materials as: dibutyl tin dilaurate, dibutyl tin oxide, dibutyl tin di-2-hexoate, stannous oleate and octoate, lead octoate, ferrous acetoacetate; and amines, such as triethylamine, diethylmethylamine, triethylenediamine, dimethylethylamine, morpholine, N-ethyl morpholine, piperzine, N,N-dimethyl benzylamine, N,N-dimethyl laurylamine and combinations thereof.

The urethane oligomers thus formed are endcapped with a (meth)acrylate-containing group to form the urethane (meth)acrylate oligomers. Suitable hydroxyl-terminated endcapping monomers include, without limitation, hydroxyalkyl (meth)acrylates, such as hydroxyethyl (meth)acrylate, hydroxypropyl (meth)acrylate, hydroxybutyl (meth)acrylate, and the like. Combinations of endcapping monomers may be employed.

In one embodiment, the multifunctional urethane (meth)acrylate oligomer has a weight average molecular weight of from 500 g/mol to 50000 g/mol, preferably from 1000 g/mol to 10000 g/mol, and more preferably from 1500 g/mol to 8000 g/mol.

Commercially available urethane (meth)acrylate oligomers are such as SARTOMER CN996, CN9001, CN981, and CN9002 (available from Sartomer Company, Inc.).

In accordance with the present invention, the multifunctional urethane (meth)acrylate oligomers may be employed in an amount of 15% to 65% by weight, preferably 35% to 65% by weight of the reactive composition.

In the reactive compositions of the present invention, the relative proportion of multifunctional (meth)acrylate oligomer to multifunctional acetoacetate compound can be characterized by the ratio of the number of the acetoacetoxy groups in the multifunctional acetoacetate compound to the number of the (meth)acrylate groups in the multifunctional (meth)acrylate compound. The multifunctional (meth)acrylate oligomer and multifunctional acetoacetate compound are blended together immediately prior to the application such that the equivalent ratio is from 1:0.6 to 1:2.0, and preferably from 1:0.75 to 1:1.25, and more preferably about 1:1.

### Catalyst

A catalyst is contained in the reactive composition to generate the Michael addition reaction between the multifunctional acetoacetate compound and multifunctional (meth)acrylate oligomer under a temperature such as from room temperature to 200 °C, preferably at room temperature (25 °C) to form an adhesive/sealing material having high crosslinking density.

Examples of the suitable catalyst in the present invention are, among others, 1,5-diazabicyclo[4.3.0]non-5-ene (DBN), triazabicyclodecene (TBD), tetramethylguanidine (TMG), trioctylphosphine (TOP), triphenylphosphine (TPP), (tetrabutylammonium hydroxide) TBAOH, NaOH, KOH, NaOEt, KOEt, phosphazanes.

The amount of the catalyst in the reactive composition is from 0.05% to 2%, and preferably from 0.1% to 0.5% by weight of the reactive composition.

### Filler

Filler is present in the reactive composition according to the present invention in an amount of from 20% by weight to less than 75% by weight of the total weight of the reactive composition. Surprisingly, if the amount is lower or higher than the above range, the tensile strength and/or the elongation at break of the cured product will deteriorate, and the cured adhesive will not be suitable for structural bonding. Preferably, the filler is present in an amount of from more than 30% by weight to 70% by weight, more preferably from 35% to 65% by weight, and in particular from 40% by weight to 60% by weight of the total weight of the reactive composition.

There is no limitation to the filler type as long as the desired properties of the reactive composition and cured product can be achieved. For example, the filler can be any inorganic fillers or any organic fillers, singly or in combination.

Examples of filler include but not limited to chalk, lime powder, fumed or fused silica, zeolites, bentonites, magnesium carbonate, diatomite, alumina, clay, talc, titanium oxide, iron oxide, zinc oxide, sand, quartz, flint, mica, glass powder, and other ground mineral substances. Organic fillers can also be used, in particular carbon black, graphite, wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added. Aluminum powder is likewise suitable as a filler.

The fumed and/or fused silicas can be surface treated to have hydrophobic property. The fumed and/or fused silicas advantageously have a BET surface area from 10 to 90 m²/g. When they are used, they do not cause any additional increase in the viscosity of the reactive composition according to the present invention, but do contribute to strengthening the cured product.

It is likewise conceivable to use fumed and/or fused silicas having a higher BET surface area, advantageously 100 to 250 m²/g, in particular 110 to 170 m²/g, as a filler. Because of the greater BET surface area, the same effect, e.g. strengthening the cured product, is achieved with a smaller weight proportion of silica. Further substances can thus be used to improve the cured product according to the present invention in terms of different requirements.

Also suitable as fillers are hollow spheres having a mineral shell or a plastic shell. They are made up of inorganic or organic substances and each have a diameter of 1 mm or less, preferably 500 µm or less.

In one embodiment, the filler contains calcium carbonate. In one preferred embodiment, the filler is selected from carbon black, fumed silica, fused silica, calcium carbonate, and combination thereof. In one more preferred embodiment, combination of carbon black and calcium carbonate are used in the reactive composition. In another preferred embodiment, combination of fumed silica and calcium carbonate are contained in the reactive composition. Examples of commercially available carbon black include Monarch products from Cabot, such as Monarch A 120, 430, 490, 570, 580, 460, 280, 700 and 800. Examples of commercially available fumed silica include Aerosil products from Evonik Degussa, such as R 202, R 816, R 812, 200 F, 380 F, R 208, R 974. Example of commercially available calcium carbonates includes Omya BLH from Omya.

### Additives

The reactive composition may, of course, contain adjunct ingredients and additives. However, the reactive compositions should broadly be formulated to exhibit an initial viscosity suitable for a paste or liquid material. The viscosity of the reactive composition ranges from less than 2000 Pa.s, preferably less than 1000 Pa s, and more preferably less than 500 Pa s.

The reactive composition of the present invention may be solvent-free. In the alternative, the composition may comprise one or more solvents, of which at least one said solvent is preferably miscible with water. It is therefore envisaged that the composition may be characterized by a solvent system consisting of two or more solvents that are miscible with water. Equally, the composition may be characterized by a solvent system consisting of at least one solvent that is immiscible with water and at least one solvent that is miscible with water. For completeness, the term "immiscible" as used herein means that in some proportion two phases are present.

Non-limiting examples of solvents miscible with water include, without limit, acetic acid, acetone, acetonitrile, dimethylformamide, dimethyl sulfoxide, dioxane, ethanol, methanol, n-propanol, isopropanol, and tetrahydrofuran. Non-limiting examples of solvents that are immiscible with water include benzene, n-butanol, butyl acetate, carbon tetrachloride, chloroform, cyclohexane, 1,2-dichloroethane, dichloromethane, ethyl acetate, di-ethyl ether, heptane, hexane, methyl-1-butyl ether, methyl ethyl ketone, pentane, di-isopropyl ether, toluene, trichloromethane, xylene, and combinations thereof.

When used, the amount of solvent present in the composition may be determined based on normal practical considerations. Preferably, the solvent is present in an amount of 0.05% to 10% by weight, more preferably 0.1% to 5% by weight, more preferably from 0.1% by weight to 1% by weight, in particular from 0.1% by weight to 0.5% by weight based on the total weight of the reactive composition.

The compositions of the present invention may, of course, also contain other standard additives such as pigments, plasticizers, levelling agents, foam suppressing agents, rheology control agents, catalysts, anti-oxidants, tackifiers, adhesion promoters, flame retardants and, UV-stabilizers. The choice of appropriate additives is limited only in that these must be compatible with the other components of the composition and cannot be deleterious to the use of the composition.

In certain embodiments, plasticizers may be included to moderate the softness and flexibility of the cured reactive adhesive/sealant composition. One or more plasticizers may in this case be selected from the group consisting of: vegetable oil; mineral oil; soybean oil; terpene resins; aromatic esters such as dioctyl phthalate, diundecyl phthalate, tricresyl phosphate and triisononyl mellitate; linear esters such as di-tridecyl adipate; chlorinated paraffin; aromatic and napthenic process oils; alkyl naphthalenes; and, low molecular weight polyisoprene, polybutadiene, mono-functional and long chain containing amines or polybutylene resins. Conventionally, the amount of plasticizer should be from 0 to 20 wt.%, preferably from 0 to 10 wt.% or from 0 to 5 wt.% based on the total weight of the adhesive/sealant composition.

Organofunctional silanes, such as mercaptofunctional, epoxyfunctional and in particular aminofunctional silanes, may preferably be used as adhesion promoters to improve the adhesion on metals. Examples of mercaptofunctional silanes are 3-mercaptopropyl trimethoxysilane or 3-mercaptopropyl triethoxysilane or their alkyl dimethoxy or alkyl diethoxy analogues. As examples of aminofunctional silanes, 3-aminopropyl alkoxysilanes, 2'-aminoethyl-3-aminopropyl alkoxysilanes may be mentioned. Epoxyfunctional silanes may be selected from a large number of compounds. By way of example, the following may be mentioned: 3-glycidyl oxymethyl trimethoxysilane, 3-glycidyl oxymethyl triethoxysilane, 3-glycidoxymethyl tripropoxysilane, 3-glycidoxymethyl tributoxysilane, 2-glycidoxyethyl trimethoxysilane, 2-glycidoxyethyl triethoxysilane, 2-glycidoxyethyl tripropoxysilane, 2-glycidoxyethyl tributoxysilane, 2-glycidoxyethyl trimethoxysilane, 1-glycidoxyethyl triethoxysilane, 1-glycidoxyethyl tripropoxysilane, 1-glycidoxyethyl tributoxysilane, 3-glycidoxypropyl trimethoxysilane, 3-glycidoxypropyl triethoxysilane, 3-glycidoxypropyl tripropoxysilane, 3-glycidoxypropyl tributoxysilane, 2-glycidoxypropyl trimethoxysilane, 2-glycidoxypropyl triethoxysilane, 2-glycidoxypropyl tripropoxysilane, 2-glycidoxypropyl tributoxysilane, 1-glycidoxypropyl trimethoxysilane, 1-glycidoxypropyl triethoxysilane, 1-glycidoxypropyl tripropoxysilane, 1-glycidoxypropyl tributoxysilane, 3-glycidoxybutyl trim ethoxysilane, 4-glycidoxybutyl triethoxysilane, 4-glycidoxybutyl tripropoxysilane, 4-glycidoxybutyl tributoxysilane, 4-glycidoxybutyl trimethoxysilane, 3-glycidoxybutyl triethoxysilane, 3-glycidoxybutyl tripropoxysilane, 3-alpropoxybutyl tributoxysilane, 4-glycidoxybutyl trimethoxysilane, 4-glycidoxybutyl triethoxysilane, 4-glycidoxybutyl tripropoxysilane, 1-glycidoxybutyl trimethoxysilane, 1-glycidoxybutyl triethoxysilane, 1-glycidoxybutyl tripropoxysilane, 1-glycidoxybutyl tributoxysilane, (3,4-epoxycyclohexyl)methyl trimethoxysilane, (3,4-epoxycyclohexyl)methyl trimethoxysilane, (3,4-epoxycyclohexyl)methyl tripropoxysilane, (3,4-epoxycyclohexyl)methyl tributoxysilane, (3,4-epoxycyclohexyl)ethyl trimethoxysilane, (3,4-epoxycyclohexyl)ethyl triethoxysilane, (3,4-epoxycyclohexyl)ethyl tripropoxysilane, (3,4-epoxycyclohexyl)ethyl tributoxysilane, (3,4-epoxycyclohexyl)propyl trimethoxysilane, (3,4-epoxycyclohexyl)propyl triethoxysilane, (3,4-epoxycyclohexyl)propyl tripropoxysilane, (3,4-epoxycyclohexyl)propyl tributoxysilane, (3,4-epoxycyclohexyl)butyl trimethoxysilane, (3,4-epoxycyclohexyl)butyl triethoxysilane, (3,4-epoxycyclohexyl)butyl tripropoxysilane, (3,4-epoxycyclohexyl)butyl tributoxysilane. The adhesion promoters are preferably used in the composition in amounts between 0.1 and 5% by weight, preferably between 0.5 and 4% by weight, especially preferably between 0.2 and 1% by weight.

Flame retardants may be added in the adhesive/sealant composition according to the present invention to improve the performance of the cured product especially when it is used for structural bonding. Examples of the flame retardants are ammonium polyphosphate, triphenylphosphine oxide, aluminum triethyl phosphinate, zinc diethyl phosphinate, melamine cyanurate, melamine phosphate, melamine polyphosphate, melamine pyrophosphate, melamine ammonium polyphosphate, melamine ammonium pyrophosphate, melamine borate, triphenyl phosphate, resorcinol bis-(diphenyl phosphate), bisphenol A-bis-(diphenyl phosphate), resorcinal-bis-(2.6-dixylylenylphosphate), aluminum hydroxide, aluminum hydroxide, magnesium dihydroxide, zinc oxide, molybdenum trioxide, antimony oxide, aluminum trihydroxide, zinc borate, calcium silicate, magnesium silicate, calcium sulfate, magnesium carbonate, dihydroxaphosphaphenantren, dihydroxaphosphaphenantren-hydroquinone, potassium diphenyl sulphone sulphonate, poly methyl phenyl siloxane, potassium-butyl perfluoro sulfonate and mixtures thereof. The flame retardants are preferably used in the composition in amounts between 0.1 and 20% by weight, preferably between 0.5 and 15% by weight, especially preferably between 0.5 and 10% by weight.

In one preferred embodiment, the reactive composition for adhesive or sealant, based on the total weight of the reactive composition, comprises or consists of:
(a) from 1% by weight to 20% by weight, preferably from 2% by weight to 15% by weight of a multifunctional acetoacetate compound,
(b) from 15% by weight to 65% by weight, preferably from 35% by weight to 65% by weight of a multifunctional urethane (meth)acrylate oligomer,
(c) from 0.05% by weight to 2% by weight, preferably from 0.1% by weight to 0.5% by weight of a catalyst,
(d) from 20% by weight to less than 75% by weight, preferably from more than 30% by weight to 70% by weight, and more preferably from 40% by weight to 60% by weight of a filler,
(e) optionally from 0.05% by weight to 10% by weight, preferably from 0.1% by weight to 5% by weight, and more preferably from 0.1% by weight to 1% by weight, in particular from 0.1% by weight to 0.5% by weight of a solvent, and
(f) optionally from 0.1% by weight to 5% by weight, preferably from 0.2% by weight to 1% by weight of an adhesion promoter.

In another aspect, it is directed to a two or multiple-part reactive composition, comprising,
(a) a first part comprising a multifunctional acetoacetate compound,
(b) a second part comprising a multifunctional urethane (meth)acrylate oligomer,

wherein a catalyst comprised in either or both of the first part and second part,
a filler comprised in either or preferably both of the first part and second part, and
the filler is present in an amount of from 20% by weight to less than 75% by weight of the total weight of the reactive composition.

The ingredient(s) in each part is stored in a container (part) separate from the other until the contents of all the containers are mixed together to form the mixture of the adhesive composition prior to the application. Upon applying and curing, a solid material forms in the bonding area.

Another embodiment of the invention is the method of using the reactive composition of the present invention to adhere substrates to each other. In this embodiment, the reactive composition is applied to a first substrate. The method of application may be conducted by a number of ways known to those having ordinary skill in the art (for example brushing, spraying, roller coating, rotogravure coating, flexographic coating, flow coating, dipping, and combinations thereof) to form a continuous or discontinuous film of the composition, as desired. In some embodiments, the reactive composition will be applied at ambient/room temperature (approximately 25°C); alternatively, the reactive composition may be applied at elevated temperature.

After the composition has been applied to the first substrate, it may then be contacted with another substrate to form a composite. The composite so formed is optionally subjected to applied pressure, such as passing it between rollers to effect increased contact of the substrates with the composition. In another embodiment of the invention, the composition may be simultaneously or sequentially applied to both surfaces of the first substrate, which composition are then simultaneously or sequentially bonded to two further substrates, which may be the same, or different. It is further contemplated that the composite construction may sequentially be bonded to other substrate(s) using the composition of the invention, or a different composition before or after the process described herein. The first and second substrates to be bonded in the method of this invention may be the same or different and include, for example paper, fabrics, leather, metal (such as aluminum and steel), china, ceramics, glass, wood, or plastics such as (PP, PC, PVC, etc.), which may have smooth or structured surfaces and may be provided in the form of rolls, sheets, films, foils etc.

In some embodiments of the present invention, the substrates are relatively thin and flat, and the resulting composites are called laminates. The substrates may be constructed in multi-ply laminate structures based upon polyalkylenes, such as polyethylenes, and polypropylenes, polyesters, and polyamides (nylon), metalized polypropylene, aluminum foil, etc. Examples of two-ply laminate constructions, include polypropylene/polypropylene, polyester/nylon, polyester/polyethylene, polypropylene/metallized polypropylene, polypropylene/aluminum foil, polyester/aluminum foil, polyamide/aluminum foil, etc.

It is contemplated that the reactive composition of the present invention will undergo a chemical reaction, called here "cure". While the invention is not limited to any particular theory, it is believed that cure begins when the reactive adhesive/sealant composition is formed and that it continues at least until the end of the pot life, and may continue after that. In some embodiments, before the end of the pot life, a layer of the reactive composition will be applied to a substrate. In some of these embodiments, at least one further substrate will be contacted with the layer of curable mixture; often, the further substrate will be contacted with the layer reactive adhesive/sealant composition before the end of the pot life. Thus, in some embodiments, the cure will not finish until after the reactive composition and the substrates are in contact. It is contemplated that the cured product will form a useful adhesive bond between the substrates.

The reactive composition is suitable for direct glazing in vehicle manufacturing and repairing. the reactive composition can be used to bond a windscreen in a vehicle in a vehicle manufacturing and repairing process, including a step of applying a reactive composition to bond a glass workpiece such as windscreen on vehicle frame(s) made of metal or alloy.

While the invention is particularly useful as an adhesive, it is contemplated that it is also applicable to sealant and elastomers. When used as an elastomer, the reactive composition may, for example, be placed in a mold or on a release surface and allowed to cure; the cured mixture could then be removed from the mold or release surface and used as intended.

Various features and embodiments of the disclosure are described in the following examples, which are intended to be representative and not limiting.

### Example

### Materials

1,5-Diazabicyclo[4.3.0]non-5-ene (DBN) was obtained from Acros Organics.

Omya BLH is a ground CaCOs chalk, obtained from Omya.

Monarch A580 is a carbon black, obtained from Cabot.

Monarch A430 is a carbon black, obtained from Cabot.

Aerosil R202 is a fumed silica, obtained from Evonik.

AAEG-215 is an acetoacetate with functionality of 2 and an average molecular weight of 246 g/mol, obtained from Arxada.

CN996 is an aliphatic urethane diacrylate with a functionality of 2 and a weight average molecular weight of 2850 g/mol, obtained from Sartomer.

CN9002 is an aliphatic urethane diacrylate with a functionality of 2 and a weight average molecular weight of 5450 g/mol, obtained from Sartomer.

CN981 is an aliphatic urethane diacrylate with a functionality of 2 and a weight average molecular weight of 1900 g/mol, obtained from Sartomer.

Standard solvents were obtained from VWR.

### Test methods

### Tensile strength

A tensile strength test was used to measure the elasticity of a material while under tensile strain according to ASTM 638. This test was conducted on a Zwick universal testing machine. In this test, 3 to 5 dog-bone shape specimens of each reactive composition were tested. The specimen was set so that the jaws of the universal testing machine grabbed from each extreme of the dog-bone specimen. A pre-load of 2N was then applied. Then the jaws separated at a rate of 200mm/min until the specimen failed. The maximum tensile strength achieved was then recorded as tensile strength.

### Elongation at break

A tensile strength test was used to measure the elasticity of a material while under tensile strain according to ASTM 638. This test was conducted on a Zwick universal testing machine. In this test, 3 to 5 dog-bone shape specimens of each reactive composition were tested. The specimen was set so that the jaws of the universal testing machine grabbed from each extreme of the dog-bone specimen. A pre-load of 2N was then applied. Then the jaws separated at a rate of 200mm/min until the specimen failed. The elongation ratio of the specimen at the moment that the specimen failed was then recorded.

If the tensile strength of the cured adhesive is no less than 2 MPa, it will be considered as acceptable for structural bonding, especially direct glazing of vehicle windscreens. If the tensile strength of the cured adhesive is no less than 3 MPa, it will be considered as excellent for such application. If the elongation at break of the cured adhesive is no less than 100%, it will be considered as acceptable for structural bonding, especially direct glazing of vehicle windscreens. If the cured adhesive possesses an elongation at break of no less than 200%, it will be considered as excellent for such application.

### Synthesis of trimethylolpropane triacetoacetate

The synthesis of trimethylolpropane triacetoacetate (AATMP) was carried out according to literature procedure "Transacetoacetylation with tert-Butyl Acetoacetate: Synthetic Applications", J. S. Witzeman, W. D. Nottingham, J. Org. Chem. 1991, 56, 1713-1718. A 500 mL 3 neck round bottom flask was charged with trimethylolpropane or pentaerythritol (1 eq.) and TBAA (1.1 eq.). Then, a Y-adaptor, mechanical stirring bar and a reflux condenser were adapted in each neck of the flask. In the Y-adaptor a thermocouple and a nitrogen connector were adjusted. The temperature was set to 140 °C under nitrogen atmosphere (reflux reached 92 °C approximately for 4h). After that, 8 hours distillation was performed at atmospheric pressure while the temperature slowly raised to 140 °C. Finally, when the distillation ceased, 2 hours distillation at reduced pressure was done from 900 mbar to 400 mbar at 140 °C. The reaction schemes are shown below.

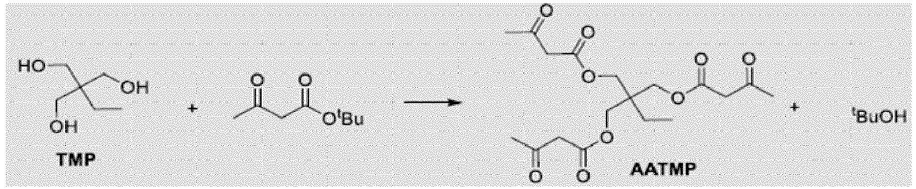

### Example 1

Monarch A580 (11.68 g) and Omya BLH (20.98 g) were added to CN9002 (62.97 g) and homogenized in a speedmixer. AATMP (3.72 g) was added and the mixture homogenized by speedmixer. DBN (0.22 g) was pre-dissolved in technical grade ethanol (0.43 g) and the mixture added to above formulation. After further homogenization the mixture was pressed to a plate of 2 mm thickness and allowed to cure for 1 day at 60°C and 6 days at 23°C. Specimen were prepared from this plate and material properties recorded according to ASTM D638. Three samples were measured and the mean results were obtained. The cured product showed a tensile strength of 6.7 MPa and an elongation at break of 380%.

### Example 2

Monarch 430 (20 g) and Omya BLH (20 g) were added to CN9002 (56.83 g) and homogenized in a speedmixer. AAEG-215 (2.57 g) was added and the mixture homogenized by speedmixer. DBN (0.2 g) was pre-dissolved in technical grade ethanol (0.4 g) and the mixture added to above formulation. After further homogenization the mixture was pressed to a plate of 2 mm thickness and allowed to cure for 1 day at 60 °C and 6 days at 23 °C. Specimen were prepared from this plate and material properties recorded according to ASTM D638. Three samples were measured and the mean results were obtained. The cured product showed a tensile strength of 4.5 MPa and an elongation at break of 560%.

### Example 3

Aerosil R202 (3 g) and Omya BLH (57 g) were added to CN9002 (17.47 g) and CN981 (17.8 g), and homogenized in a speedmixer. AATMP (4.13 g) was added and the mixture homogenized by speedmixer. DBN (0.2 g) was pre-dissolved in technical grade ethanol (0.4 g) and the mixture added to above formulation. After further homogenization the mixture was pressed to a plate of 2 mm thickness and allowed to cure for 1 day at 60 °C and 6 days at 23 °C. Specimen were prepared from this plate and material properties recorded according to ASTM D638. Three samples were measured and the mean results were obtained. The cured product showed a tensile strength of 2.86 MPa and an elongation at break of 260%.

### Example 4

Monarch 430 (20 g) and Omya BLH (20 g) were added to CN996 (48.94 g) and Dynasylan 1122 (0.3 g) and homogenized in a speedmixer. AAEG-215 (10.16 g) was added and the mixture homogenized by speedmixer. DBN (0.2 g) was pre-dissolved in technical grade ethanol (0.4 g) and the mixture added to above formulation. After further homogenization the mixture was pressed to a plate of 2 mm thickness and allowed to cure for 1 day at 60 °C and 6 days at 23 °C. Specimen were prepared from this plate and material properties recorded according to ASTM D638. Three samples were measured and the mean results were obtained. The cured product showed a tensile strength of 5.97 MPa and an elongation at break of 630%.

### Example 5

Monarch A580 (10 g) and Omya BLH (20 g) were added to CN996 (58.87 g) and homogenized in a speedmixer. AATMP (10.53 g) was added and the mixture homogenized by speedmixer. DBN (0.2 g) was pre-dissolved in technical grade ethanol (0.4 g) and the mixture added to above formulation. After further homogenization the mixture was pressed to a plate of 2 mm thickness and allowed to cure for 1 day at 60 °C and 6 days at 23 °C. Specimen were prepared from this plate and material properties recorded according to ASTM D638. Three samples were measured and the mean results were obtained. The cured product showed a tensile strength of 14.7 MPa and an elongation at break of 155%.

### Comparative Example 1

DBN (0.33 g) was presolved in technical grade ethanol (0.66 g) and the mixture, together with Dynasylan 1122 (0.49 g), was added to CN996 (81.55 g) and homogenized by speedmixer. AAEG-215 (16.95 g) was added to the above formulation. After further homogenization the mixture was pressed to a plate of 2 mm thickness and allowed to cure for 1 day at 60 °C and 6 days at 23 °C. Specimen were prepared from this plate and material properties recorded according to ASTM D638. Three samples were measured and the mean results were obtained. The cured product showed a tensile strength of 0.371 MPa and an elongation at break of 811.7%.

### Comparative Example 2

Monarch 430 (15 g) and Omya BLH (60 g) were added to CN996 (20.49 g) and homogenized in a speedmixer. AAEG-215 (4.26 g) was added and the mixture homogenized by speedmixer. DBN (0.08 g) was predisolved in technical grade ethanol (0.17 g) and the mixture added to above formulation. After further homogenization the mixture was pressed to a plate of 2 mm thickness and allowed to cure for 1 day at 60 °C and 6 days at 23 °C. Specimen were prepared from this plate and material properties recorded according to ASTM D638. Three samples were measured and the mean results were obtained. The cured product showed a tensile strength of 2.39 MPa at and an elongation at break of 56.9 %.

It is evident from the above results that the inventive examples all exhibited acceptable or excellent combination of tensile strength and elongation at break while the comparative examples failed to achieve so in terms of at least one of the properties.

## Claims

1. A reactive composition for adhesive, comprising:
(a) a multifunctional acetoacetate compound,
(b) a multifunctional urethane (meth)acrylate oligomer,
(c) a catalyst, and
(d) a filler,
wherein the filler is present in an amount of from 20% by weight to less than 75% by weight of the total weight of the reactive composition.

2. The reactive composition according to claim 1, wherein the multifunctional acetoacetate compound has at least two acetoacetoxy groups, preferably 2 to 10 acetoacetoxy groups, and more preferably 3 to 4 acetoacetoxy groups.

3. The reactive composition according to claim 1 or 2, wherein the multifunctional acetoacetate compound is an acetoacetylated polyol obtained from glycerol, trimethylolpropane, ethanol isosorbide, neopentylglycol, pentaerythritol, di-methylolpropane, di-pentaerythritol, propoxylated monosaccharides, trimethylol ethane, and combination thereof.

4. The reactive composition according to any of claims 1 to 3, wherein the multifunctional urethane (meth)acrylate oligomer has a weight average molecular weight of from 500 g/mol to 50000 g/mol, preferably from 1000 g/mol to 10000 g/mol, and more preferably from 1500 g/mol to 8000 g/mol.

5. The reactive composition according to any of claims 1 to 4, wherein the multifunctional urethane (meth)acrylate oligomer is selected from a multifunctional polyester urethane (meth)acrylate, a multifunctional polyether urethane (meth)acrylate, a multifunctional polyester/polyether urethane (meth)acrylate, and combination thereof.

6. The reactive composition according to any of claims 1 to 5, wherein the molar equivalent ratio of acetoacetate groups to (meth)acrylate groups in the reactive adhesive/sealant composition is larger than 1:1, preferably in the range from 2:1 to 1.05:1, and preferably in the range from 2:1 to 1.1:1.

7. The reactive composition according to any of claims 1 to 6, wherein the catalyst is selected from 1,5-diazabicyclo[4.3.0]non-5-ene (DBN), triazabicyclodecene (TBD), tetramethylguanidine (TMG), trioctylphosphine (TOP), triphenylphosphine (TPP), (tetrabutylammonium hydroxide) TBAOH, NaOH, KOH, NaOEt, KOEt, phosphazanes and combination thereof.

8. The reactive composition according to any of claims 1 to 7, wherein the filler is selected from carbon black, pyrogenic silica, precipitated silica, calcium carbonate, and combination thereof.

9. The reactive composition according to any of claims 1 to 8, wherein the filler is present in an amount of from more than 30% to 70% by weight, and preferably from 40% to 60% by weight of the total weight of the reactive composition.

10. The reactive composition according to any of claims 1 to 7, optionally comprising one or more additives selected from solvents, pigments, plasticizers, levelling agents, foam suppressing agents, rheology control agents, anti-oxidants, tackifiers, adhesion promoters, flame retardants, UV-stabilizers and combination thereof.

11. A reactive composition for adhesive, based on the total weight of the reactive composition, comprising:
(a) from 1% by weight to 20% by weight of a multifunctional acetoacetate compound,
(b) from 15% by weight to 65% by weight of a multifunctional urethane (meth)acrylate oligomer,
(c) from 0.05% by weight to 2% by weight of a catalyst, and
(d) from 20% by weight to less than 75% by weight, preferably from 40% by weight to 60% by weight of a filler.

12. A two or multiple-part reactive composition for adhesive, comprising,
(a) a first part comprising a multifunctional acetoacetate compound,
(b) a second part comprising a multifunctional urethane (meth)acrylate oligomer,
wherein a catalyst is comprised in either or both of the first part and second part,
a filler is comprised in either or both of the first part and second part, and
the filler is present in an amount of from 20% by weight to less than 75% by weight of the total weight of the reactive composition.

13. Cured product of the reactive composition according to any of claims 1 to 11 or the two or multiple-part reactive composition according to claim 12.

14. Use of the reactive composition according to any of claims 1 to 11 or the two or multiple-part reactive composition according to claim 12 in bonding substrates made of or having a surface of paper, fabrics, leather, metal, china, ceramics, glass, wood, or plastics.

15. Method of bonding a windscreen in a vehicle, comprising applying the reactive composition according to any of claims 1 to 11 or the two or multiple-part reactive composition according to claim 12 to bond a windscreen on a vehicle frame.
